# EUROPÄISCHE PATENTSCHRIFT

(11) **EP 2 745 983 B1**
(45) Veröffentlichungstag und Bekanntmachung des Hinweises auf die Patenterteilung: **30.03.2016**
(21) Anmeldenummer: 13188861.2
(22) Anmeldetag: 16.10.2013
(51) Int. Cl.: B23Q 3/155

(54) **Werkzeugspeicher für auf Hohlschaftkegeln aufgespannte Werkzeuge**
Tool magazine for tools clamped on hollow shaft cones
Magasins d'outils pour outils fixés sur des cônes creux

(30) Priorität: 20.12.2012 AT 506022012
(43) Veröffentlichungstag der Anmeldung: 25.06.2014
(73) Patentinhaber: Promot Automation GmbH, 4661 Roitham (AT)
(72) Erfinder: Weseßlintner, Johannes, 4663 Laakirchen (AT)
(74) Vertreter: Patentanwaltskanzlei Hübscher

(56) Entgegenhaltungen:
- DE-C1- 3 715 874
- DE-U1- 20 017 808
- US-A- 6 142 920

## Beschreibung

Die Erfindung bezieht sich auf einen Werkzeugspeicher für auf Hohlschaftkegeln aufgespannte Werkzeuge mit Aufnahmen für die über seitliche Einschubführungen in radialer Richtung in die Aufnahmen einführbaren Hohlschaftkegel, wobei die Hohlschaftkegel eine umlaufende Keilnut mit einem durch einen gegenüber der Keilnut abgesetzten Nutboden gebildeten Freiraum und die Aufnahmen radial vorstehende, in die Keilnut der Hohlschaftkegel formschlüssig eingreifende Keilstege aufweisen.

Im Zusammenhang mit Werkzeugen, die auf Hohlschaftkegel aufgespannt werden, ist es bekannt (siehe z.B. die Patentschrift US 6,142,920), diese Werkzeuge zusammen mit den Hohlschaftkegeln in Werkzeugspeichern abzulegen, die zu diesem Zweck Aufnahmen für die Hohlschaftkegel bilden. Diese Aufnahmen sind mit seitlichen, gegen die Aufnahmen abfallenden Einschubführungen versehen, die die Hohlschaftkegel im Bereich ihrer für das Einsetzen in den Werkzeugmaschinen vorgesehenen, in Umfangsrichtung verlaufenden Keilnuten führen, sodass die Hohlschaftkegel über diese Einschubführungen in Form von Keilführungen zentriert in die Aufnahmen gleiten und mit Hilfe von in die Keilnut formschlüssig eingreifenden, radial vorstehenden Keilstegen der Aufnahmen lagegenau festgehalten werden. Da die Aufnahmen die Hohlschaftkegel lediglich teilweise umfassen, kann es bei ausladenden Werkzeugen dazu kommen, dass die lagegenaue Halterung der Hohlschaftkegel und damit der aufgespannten Werkzeuge durch ein gewichtsbedingtes Kippen der Werkzeuge gefährdet wird. Der formschlüssige Eingriff der Keilstege der Aufnahmen in die Keilnut der Hohlschaftkegel wird ja lediglich durch das Werkzeuggewicht gesichert, sodass beim Auftreten entsprechender Kippmomente eine Verlagerung der einseitig in die Keilnut eingreifenden Keilstege quer zur Keilnut möglich wird, zumal die Keilnut fertigungsbedingt durch einen abgesetzten Nutboden einen Freiraum im Anschluss an die die Keilnut begrenzenden Kegelflächen bildet.

Der Erfindung liegt somit die Aufgabe zugrunde, einen Werkzeugspeicher der eingangs geschilderten Art so auszugestalten, dass mit einfachen konstruktiven Mitteln ein Kippen der Hohlschaftkegel gegenüber ihren Aufnahmen auch bei ausladenden Werkzeugen sicher unterbunden werden kann.

Die Erfindung löst die gestellte Aufgabe dadurch, dass die Keilstege mit in den Freiraum der Keilnuten formschlüssig eingreifenden Ansätzen versehen sind.

Durch diese einfache Maßnahme wird eine zusätzliche Abstützung der Keilstege der Aufnahmen in der Keilnut der Hohlschaftkegel und damit ein Anschlag geschaffen, der eine Querverlagerung der Keilstege gegenüber den Keilnuten verhindert, sodass ein Kippen der Werkzeuge in den Aufnahmen des Werkzeugspeichers ausgeschlossen werden kann, ohne an den genormten Hohlschaftkegeln konstruktive Änderungen vornehmen zu müssen.

Um das selbständige Zentrieren der Hohlschaftkegel gegenüber den Aufnahmen beim Einschieben der Hohlschaftkegel nicht zu gefährden, können die Einschubführungen Keilführungen bilden, die die Keilstege der Aufnahmen fortsetzen, wobei sich die vorstehenden Ansätze der Keilstege nur über einen Teil der Umfangslänge der Keilstege erstrecken. Durch die gegenüber den Ansätzen in Umfangsrichtung verlängerten Keilstege kann der Zentriervorgang nicht durch die Ansätze beeinträchtigt werden, die ja erst dann in den durch den abgesetzten Nutboden bedingten Freiraum formschlüssig eingreifen, wenn die Zentrierung bereits über die Keilstege erfolgt ist.

In der Zeichnung ist der Erfindungsgegenstand beispielsweise dargestellt. Es zeigen
- Fig. 1: einen erfindungsgemäßen Werkzeugspeicher in einer schematischen Vorderansicht,

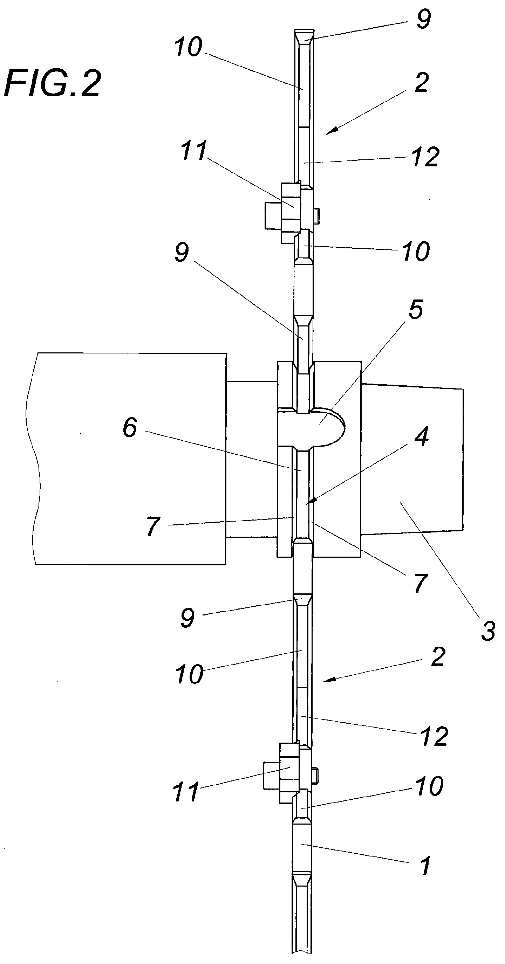

- Fig. 2: diesen Werkzeugspeicher in einer Seitenansicht in einem größeren Maßstab,
- Fig. 3: eine Aufnahme des Werkzeugspeichers in einer zum Teil aufgerissenen Vorderansicht in einem größeren Maßstab und
- Fig. 4: einen Schnitt nach der Linie IV-IV der Fig. 3.

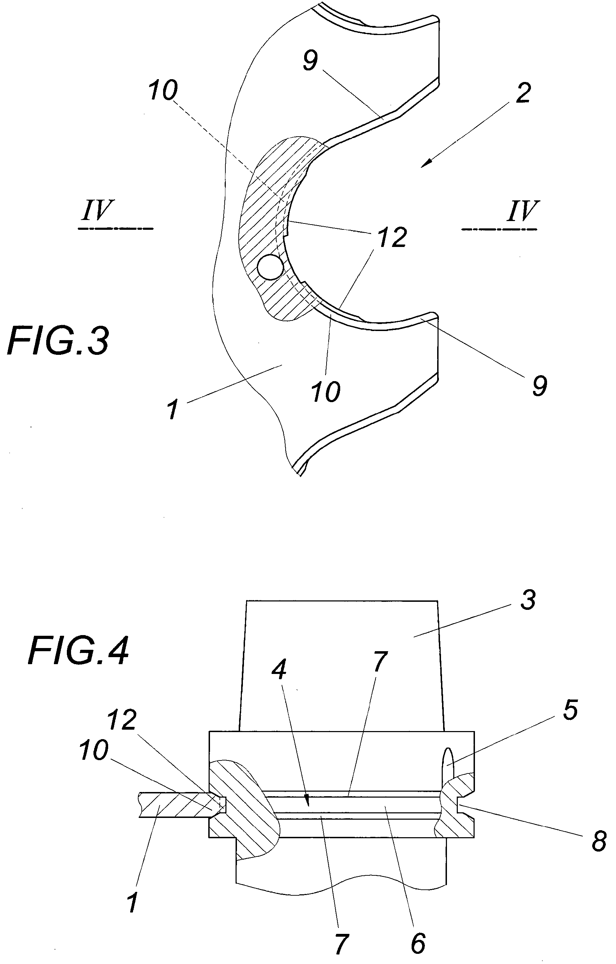

Der dargestellte Werkzeugspeicher weist ein plattenförmiges Traggestell 1 mit an den beiden Längsseiten übereinander angeordneten Aufnahmen 2 für auf Hohlschaftkegel 3 aufgespannte Werkzeuge auf. Die Hohlschaftkegel 3 sind normgemäß mit einer umlaufenden Keilnut 4 versehen, die durch einander diametral gegenüberliegende Greifertaschen 5 unterschiedlicher Breite unterbrochen wird. Der Nutboden 6 ist gegenüber den die Keilnut 4 begrenzenden Kegelflächen 7 unter Ausbildung eines Freiraums 8 zurückgesetzt, wie dies insbesondere der Fig. 4 entnommen werden kann.

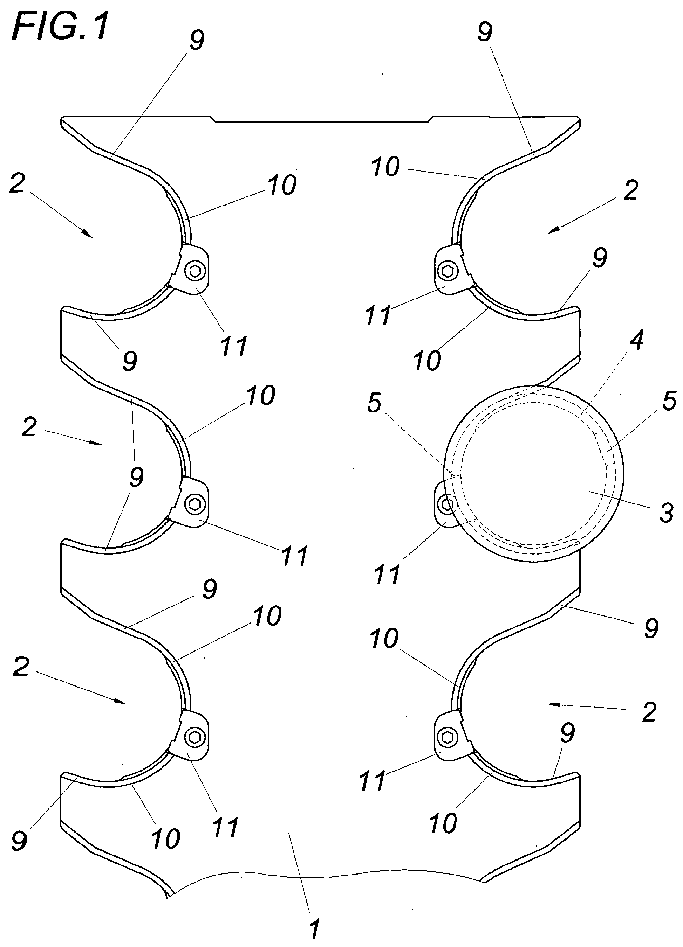

Die Aufnahmen 2 sind mit seitlichen Einschubführungen 9 versehen und bilden in die Keilnuten 4 der Hohlschaftkegel 3 formschlüssig eingreifende Keilstege 10. Da die Einschubführungen 9 vorteilhaft eine Verlängerung der Keilstege 10 der Aufnahmen 2 bilden, können die Hohlschaftkegel 3 mit den aufgespannten Werkzeugen in einfacher Weise entlang der gegen die Aufnahmen 2 abfallenden Einschubführungen 9 in die Aufnahmen 2 eingeschoben werden, in denen die Hohlschaftkegel 3 mit Hilfe der formschlüssig in die Keilnut 4 eingreifenden Keilstege 10 lagegenau gehalten werden. Um eine vorgegebene Drehlage der Hohlschaftkegel 3 sicherzustellen, sind im Bereich der die Hohlschaftkegel 3 zum Teil umschließenden Aufnahmen 2 Anschläge 11 vorgesehen, die in eine der beiden Greifertaschen 5 des Hohlschaftkegels 3, vorzugsweise in die mit der größeren Breite, eingreifen und damit die Drehlage des jeweiligen Hohlschaftkegels 3 eindeutig bestimmen, wie dies der Fig. 1 entnommen werden kann.

Damit ein Kippen der Hohlschaftkegel 3 innerhalb der Aufnahmen 2 durch eine Verlagerung der Keilstege 10 gegenüber der Keilnut 4 verhindert werden kann, sind die Keilstege 10 mit radial vorstehenden, formschlüssig in den Freiraum 8 der Keilnut 4 eingreifenden Ansätzen 12 versehen, wie dies insbesondere aus den Fig. 3 und 4 ersichtlich ist. Durch diese einfache konstruktive Maßnahme wird eine sichere, lagegenaue Halterung der Hohlschaftkegel 3 in den Aufnahmen 2 erreicht, ohne konstruktive Änderungen an den genannten Hohlschaftkegeln 3 vornehmen zu müssen.

Entsprechend der Fig. 3 ergibt sich, dass die vorstehenden Ansätze 12 der Keilstege 10 sich nur über einen Teil der Umfangslänge der Keilstege 10 erstrecken. Diese Maßnahme bringt den Vorteil mit sich, dass die Hohlschaftkegel 3 beim Einführen entlang der Einschubführungen 9 bereits über die Keilstege 10 zentriert werden, bevor die Ansätze 12 in den durch den abgesetzten Nutboden 6 bedingten Freiraum 8 eingreifen, sodass durch die damit verbundene Vorzentrierung der Eingriff der Ansätze 12 in den Freiraum 8 der Keilnuten 4 ohne ein zusätzliches Ausrichten erfolgt. Selbstverständlich ist es aber auch möglich, sich bis in den Bereich der Einschubführungen 9 erstreckende Ansätze 12 vorzusehen, wenn auf den Vorteil der Vorzentrierung verzichtet wird.

## Patentansprüche

1. Werkzeugspeicher für auf Hohlschaftkegeln (3) aufgespannte Werkzeuge mit Aufnahmen (2) für die über seitliche Einschubführungen (9) in radialer Richtung in die Aufnahmen (2) einführbaren Hohlschaftkegel (3), wobei die Hohlschaftkegel (3) eine umlaufende Keilnut (4) mit einem durch einen gegenüber der Keilnut (4) abgesetzten Nutboden (6) gebildeten Freiraum (8) und die Aufnahmen (2) radial vorstehende, in die Keilnut (4) der Hohlschaftkegel (3) formschlüssig eingreifende Keilstege (10) aufweisen, **dadurch gekennzeichnet, dass** die Keilstege (10) mit in den Freiraum (8) der Keilnuten (4) formschlüssig eingreifenden Ansätzen (12) versehen sind.

2. Werkzeugspeicher nach Anspruch 1, **dadurch gekennzeichnet, dass** die Einschubführungen (9) die Keilstege (10) der Aufnahmen (2) fortsetzende Keilführungen bilden und dass sich die vorstehenden Ansätze (12) der Keilstege (10) nur über einen Teil der Umfangslänge der Keilstege (10) erstrecken.

## Claims

1. Tool magazine for tools which are clamped on hollow shaft cones (3) and have receptacles (2) for the hollow shaft cones (3) which can be introduced in the radial direction into the receptacles (2) via lateral insertion guides (9), wherein the hollow shaft cones (3) comprise a circumferential wedge groove (4) having a free space (8) which is formed by a groove base (6) which is offset with respect to the wedge groove (4) and the receptacles (2) comprise radially protruding wedge webs (10) which engage in a form-fitting manner into the wedge groove (4) of the hollow shaft cones (3), **characterised in that** the wedge webs (10) are provided with shoulders (12) which engage in a form-fitting manner into the free space (8) of the wedge grooves (4).

2. Tool magazine as claimed in claim 1, **characterised in that** the insertion guides (9) form wedge guides which continue the wedge webs (10) of the receptacles (2) and **in that** the protruding shoulders (12) of the wedge webs (10) extend only over a portion of the peripheral length of the wedge webs (10).

## Revendications

1. Magasin d'outils pour des outils fixés sur des cônes à tige creuse (3) avec des logements (2) pour les cônes à tige creuse (3) pouvant être insérés dans les logements (2) dans la direction radiale par des guides d'insertion (9) latéraux, les cônes à tige creuse (3) présentant une rainure de clavette (4) périphérique avec un espace libre (8) formé par un fond de rainure (6) posé en face de la rainure de clavette (4) et les logements (2), des barres de clavette (10) faisant saillie radialement, venant en prise de façon solidaire dans la rainure de clavette (4) des cônes à tige creuse (3), **caractérisé en ce que** les barres de clavette (10) sont munies d'appendices (12) venant en prise de façon solidaire dans l'espace libre (8) des rainures de clavette (4).

2. Magasin d'outils selon la revendication 1, **caractérisé en ce que** les guides d'insertion (9) forment les barres de clavette (10) des guides de clavette prolongeant des logements (2) et **en ce que** les appendices (12), en saillie, des barres de clavette (10) ne s'étendent que sur une partie de la longueur circonférentielle des barres de clavette (10).
